# EUROPEAN PATENT APPLICATION

(11) **EP 0 660 628 A2**
(43) Date of publication of application: **28.06.1995**
(21) Application number: 94309808.7
(22) Date of filing: 23.12.1994
(51) Int. Cl.: H04Q 7/32, H04M 1/72

(54) **A radio telephone adaptor**

(30) Priority: 23.12.1993 FI 935838
(71) Applicant: NOKIA MOBILE PHONES LTD., SF-24101 Salo (FI)
(72) Inventor: Levanto, Lauri, SF-25250 Märynummi (FI); Alanärä, Seppo, SF-90800 Oulu (FI)
(74) Representative: Haws, Helen Louise

(57) **Abstract**

The invention relates to an adaptor unit, by means of which present mobile phone sets may be used as terminals of the wire line network. The adaptor unit (8) is connected parallel to the telephone set. The adaptor unit (8) may also contain a call transfer or an answering machine.

## Description

The invention relates to an adaptor unit enabling present radio telephones to be used as wire line network terminals.

The telephone, like the watch and the calendar, is becoming a personal item. The requirements posed on individual telephones are best met by radio telephones. Directing all telephone interconnections over the air is not a realistic idea, since the channel density that would be required is not available. It would be more advantageous to utilize the existing wire line network as a part of the individual telephone system.

It is known to use an ordinary wire line network telephone set so that it forms a speech communication over the cellular network when connected to a radio telephone. This solution has the drawback of requiring two telephone sets.

There is a previous Patent Application for a cordless cellular phone (GB 2,225,512 A). In a cordless cellular phone an actuator is provided, by means of which the speech communication passes via two radio paths, starting point-to-point cordless and continuing in a cellular network or a wire line network.

The prior art is described below with reference to the enclosed figure 1, which illustrates the principle of a cordless cellular phone according to the Patent Application GB 2,225,512 A.

Figure 1 shows the principle of the cordless cellular phone of the Patent Application GB 2,225,512 A. Cordless cellular phone 1 communicates with a privately used cordless base station 2 or an area cordless base station 3 and via base station 2 or 3 with telephone service network 4. Cordless cellular phone 1 may also communicate with remote station 5 of the cellular network and over this with control station 6 of the cellular network and further with telephone service network 7.

In accordance with the invention there is provided an adapter for a radio telephone comprising: means for adapting signals suitable for communication with a radio telephone to signals suitable for transmission along a landline network and/or vice versa; means for coupling to a radio telephone such that the signals suitable for communication with the radio telephone are transmittable therebetween; and means for coupling to a landline network such that the signals suitable for transmission along a landline network are transmittable therebetween.

The invention provides means by which the same radio telephone may operate optionally on a wire line network and a cellular network. Thus, the user may use the services, such as short dialling available from the terminal, and yet route the communication via the network that is most advantageous for each particular call. In addition, the user may always be reached at the same telephone number, using the cheapest communication route available each time.

The present invention provides an adaptor unit, by means of which existing radio telephones can be used as wire line network terminals with attendant advantages. The invention allows a radio telephone to be connected in parallel with the telephone network terminal i.e. a telephone set, thus enabling the radio telephone to be used directly as a wire line network terminal by passing the cellular network.

The invention is described in further detail below with reference to Figures 2 to 6 of the enclosed Figures, of which:
Figure 2 shows an adaptor unit in accordance with the invention;
Figure 3 is a block diagram showing the interconnection between a radio telephone and the adapter unit of Figure 2;
Figure 4 shows the block diagram of an alternative embodiment of the invention;
Figure 5 shows an implementation of the telephone line connection of the adaptor unit of the Figure 4 arrangement;
Figure 6 shows a circuit diagram of the implementation of the adaptor unit of the Figure 4 arrangement.

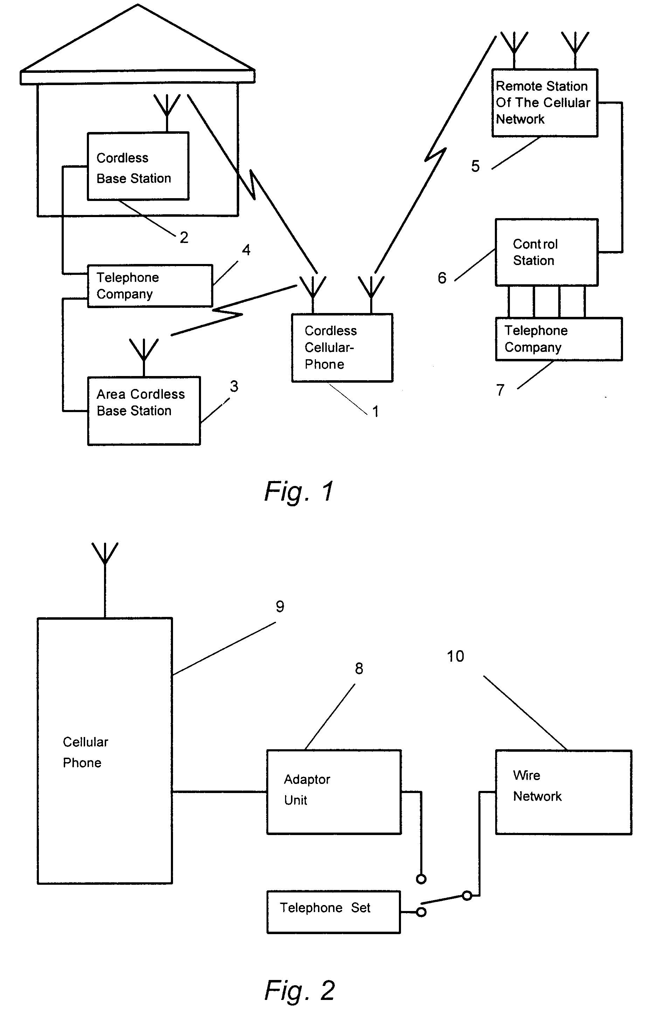

Figures 2 to 6 show embodiments of the invention.

Figure 2 shows the principle of the adaptor unit according to an embodiment of the invention. Adaptor unit 8 is connected in parallel with the terminal, i.e. the telephone set of land line network 10. The radio telephone 9 can therefore directly use the land line network 10 by-passing the cellular network.

The same radio telephone set 9 may operate directly on the land line network 10, or if this is not available, on the cellular network. This provides a choice in the communication path used.

The adaptor unit 8 is connected to the land line network 10 with conductors identical to those by which a telephone set is connected to the land line. It also uses the same signal levels as a land line telephone. The adaptor unit 8 is connected to the radio telephone 9 via a service line. Output and input speech signals pass along the service line as well as control data needed for forming dealing signals for a land line network 10.

The same radio telephone set 9 may thus operate in two different telephone networks and the communication mode may be selected among these, so that the most advantageous wire line network 10 communication is selected whenever possible.

The adaptor unit 8, which connects the radio telephone 9 to the land line network 10, could instead provide a cordless connection between the radio telephone 9 and the adaptor unit 8. As, for example, is the case between the handset and receiver of a cordless land line telephone.

Transfer between radio and land line networks could be automatically or semi-automatically provided by the adaptor unit 8. Disconnecting the radio telephone from the adaptor unit 8 could divert control of calls to a desired telephone whether land line or radio via the radio network. The adaptor unit 8 may optionally contain an answering machine, which provides call control if the chosen land line network service level 10 does not provide a call transfer option.

Call transfer from a cellular network to a land line network may be performed as a fully automatic or a semi-automatic service request when the radio telephone 9 is connected to the adaptor unit 8. The user can, for instance, use the numbers stored in the memory of the radio telephone for automatic dialling calls to the fixed network also.

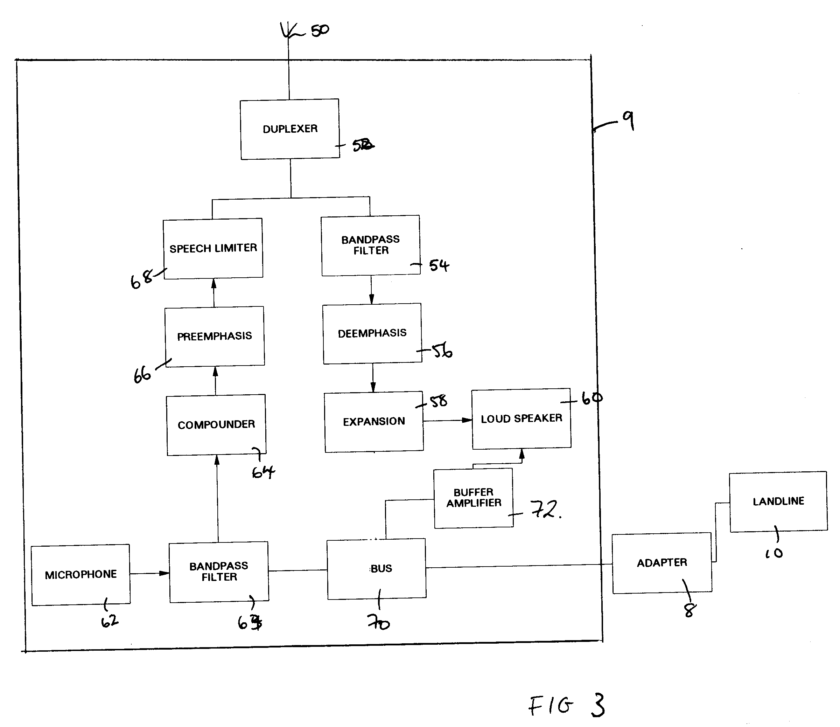

Figure 3 is a block diagram of a radio telephone connected to the adapter unit 8 of Figure 2 showing how the radio telephone and adapter cooperate. The radio telephone 9 receives over-the-air signals via an antenna 50. If the radio is operating on the cellular system, the received speech signal is passed through duplexer 52 to bandpass filter 54. It is then deemphasised at a deemphasis circuit 56 and expanded by an expansion circuit 58. The expanded signal is delivered to the loud speaker 60. In cellular mode, the user speaks into a microphone 62. The signals generated are filtered by band pass filter 63, compounded in a compounder circuit 64, preemphasised in a preemphasis circuit 66 then pass through speech limiter circuit 68 before passing to the antenna for transmission via the duplexer 52. All these circuits are well known in the radio telephone art.

When the radio telephone is acting as a land line telephone, speech signals are provided to the adapter 8 for transmission on the land line network 10. The signals provided to the land line should be compatible with the protocols of the land line to which they are connected. The signals for transmission over the air are unlikely to be the same as those for transmission along the land line. In the specific example signals filtered by the bandpass filter 63 are passed directly to a control pathway for both control and audio signals, BUS 70, that then provides the signals to the adapter 8 for conversion and transmission along the land line 10.

On receiving a call via the land line 10, signals are provided from the adapter to the BUS 70 which then feeds the signals to the loud speaker 60 via a buffer amplifier 72 for output.

Control over which system is to be used for a particular call can also be achieved using the BUS. Connection between the BUS and the adapter is made via a connector on the bottom of the radio telephone. When the radio telephone is connected to the adapter, the adapter can sense it through e.g a voltage level in one of the connector pins of the BUS. The BUS signalling can be used to make a BUS registration to the phone. After receiving the registration from the adapter the phone will notify the air interface. One way in which calls can then be diverted via the landline is by requesting a call forwarding service to forward calls to the landline number to which it has been connected. Another option is to make a power-off registration to the Base Station (BS) which then connects all incoming calls to a message centre. A further option would be to let the telephone receive air interface calls simultaneously with the landline (wireline) calls.

If the user wants to place a call over the land line using the radio telephone he/she merely picks it up with the adapter connected and uses the regular keypad and normal call buttons. After the call button is pressed, the radio telephone may be arranged to proceed in one of, amongst others, the following two ways:
1. A control bus message indicating the dialled digits is sent to the adapter 8, after it has received these, the adapter will first "hook off" which corresponds to actuating the audio connection to the wireline. Once this has been achieved, it will signal the dialled number to the wireline using either dtmf or impulse dialling;
2. A control bus message is sent to the adapter 8 asking it to activate the audio connection to wireline (hook off). The portable then dials the number by generating DTMF tones or by impulse commands using hook on/hook off commands to the adapter.

For incoming calls the adapter 8 generates a control bus message and transmits this to the radio telephone triggering an incoming call alarm signal (ring tone). After this the radio telephone sends a BUS message to create an audio connection between the radio telephone and the landline.

When ending the call (user presses proper end button on the radio telephone) the phone sends a corresponding BUS message to the adapter to disconnect the call (hook on).

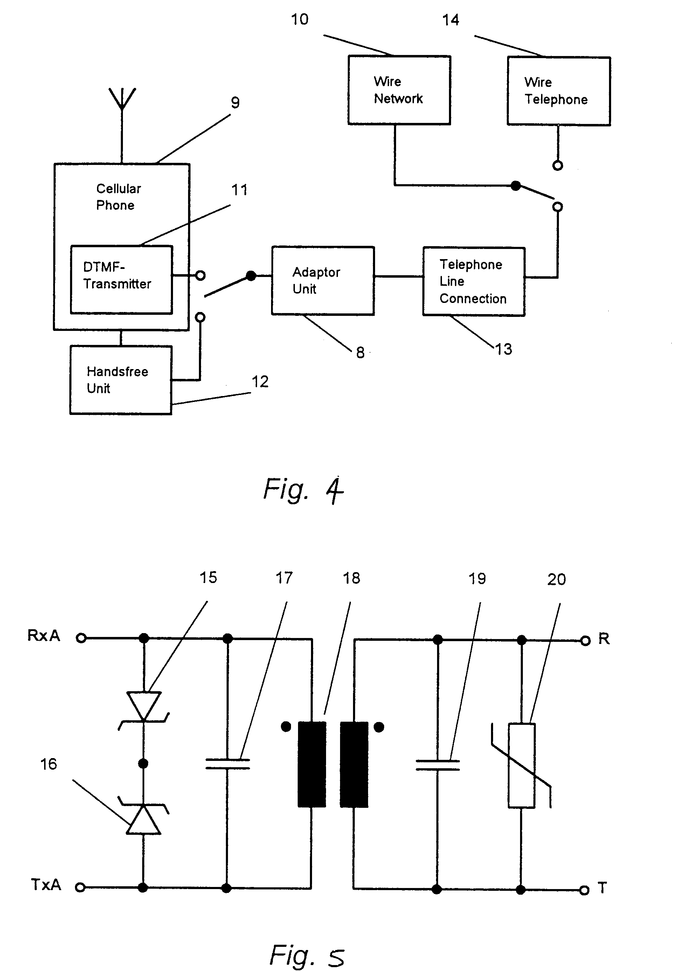

Figure 4 shows a block diagram of another embodiment of the invention. The adaptor unit 8 is connected in parallel with a land line telephone 14 of land line network 10 through a telephone line interface 13 which may be a wall socket typically used for connecting a land line phone to the network. The radio telephone set 9 can thus be used connected directly to the line network 10 by-passing the cellular network.

Radio telephone 9 can initiate a call by transmitting Dual-tone multi-frequency (DTMF) signals (or other signals if a DTMF decoder is not available in the telephone) via adaptor unit 8 and telephone line interface 13 to the land line network 10 using the DTMF transmitter 11. Once a call is initiated from the directory of the radio telephone 9, the adaptor unit 8 is connected to the DTMF transmitter 11. When speaking on the land line network 10, the adaptor unit 8 is connected to the hands-free unit 12 of cellular phone 9 via a suitable switching arrangement.

In the above cases the adaptor unit could also be integrated in the actual mobile phone.

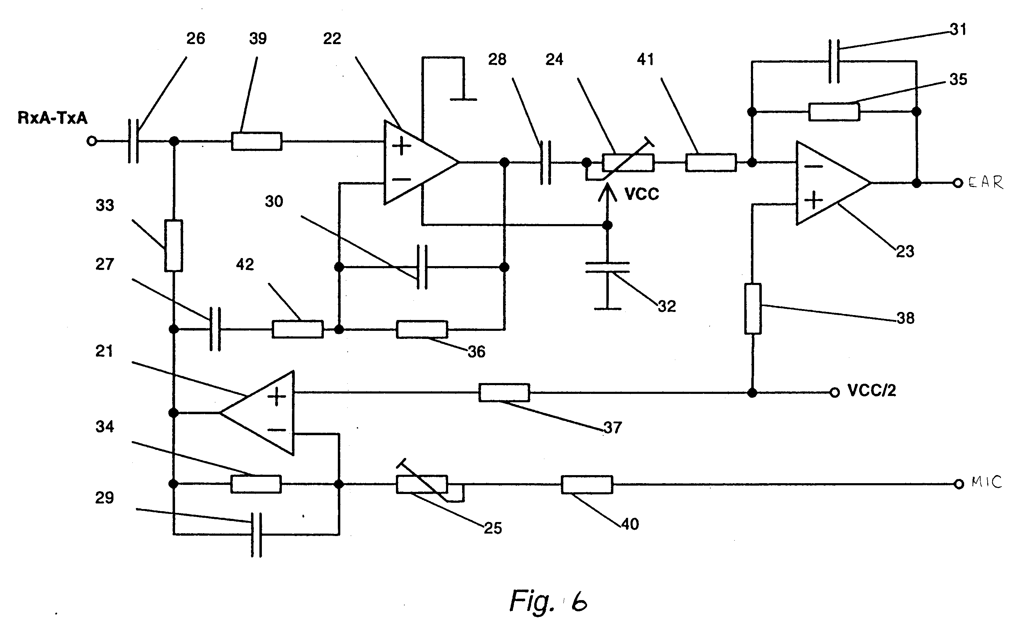

Figure 5 shows the implementation of telephone line interface 13 of the adaptor unit 8. Zener diodes 15, 16 and voltage-sensitive resistance 20 protect the land line connection interface circuit 13 against overvoltages. The Interface circuit 13 also comprises filtering capacitors 17, 19 and a transformer 18.

Figure 6 shows a circuit diagram of the implementation of the adaptor unit 8. The land line network 10 views the circuit on the level of resistance 33 of the impedance level because the direct-current voltage is zero in the output of operational amplifier 21. Operational amplifier 21 transfers power to the point from which operational amplifier 22 takes power in. The equilibrium of this circuit is controlled using regulating resistors 24 and 25. The amplification and upper limits of the frequency responses are controlled using the feedback loops of operational amplifiers 21, 22 and 23. The lower limits of the frequency responses are controlled through capacitors 26, 27 and 28. The coupling further comprises capacitors 29 - 32 and resistances 33 - 42.

The present invention includes any novel feature or combination of features disclosed herein either explicitly or any generalisation thereof irrespective of whether or not it relates to the claimed invention or mitigates any or all of the problems addressed.

In view of the foregoing description it will be evident to a person skilled in the art that various modifications may be made within the scope of the invention.

## Claims

1. An adaptor for a radio telephone comprising:
means for adapting signals suitable for communication with a radio telephone to signals suitable for transmission along a landline network and/or vice versa;
means for coupling to a radio telephone such that the signals suitable for communication with the radio telephone are transmittable therebetween; and
means for coupling to a landline network such that the signals suitable for transmission along a landline network are transmittable therebetween.

2. An adaptor according to claim 1 wherein the means for coupling to a radio telephone comprises means for providing a cordless link to the radio telephone.

3. An adaptor according to claim 1 wherein the means for coupling to a radio telephone comprises a service line for transmitting both data indicative of speech and control signals.

4. An adaptor according to any preceding claim wherein the adaptor provides means for selecting operation of the radio telephone via the landline.

5. An adapter according to claim 4 wherein the means for selecting is responsive to the radio telephone being connected to the adapter.

6. An adapter according to claim 5 wherein on disconnection of the radio telephone from the adaptor unit, calls to the radio telephone are directed over-the-air.

7. An adapter according to any preceding claim wherein the adapter provides signals corresponding to the signal protocol of the landline.

8. An adapter according to any preceding claim wherein the signal levels of signals provided to the landline correspond to signals levels on the landline network.

9. An adaptor according to any preceding claim wherein the adaptor is disposed within the housing of the radio telephone.

10. An adaptor according to any preceding claim wherein the means for adapting comprises means for providing DTMF or pulse signals for transmission along a landline network.

11. An adaptor according to any preceding claim wherein means is provided for communication with a radio telephone operable with a handsfree unit such that the adaptor is operable to communicate with the radio telephone during call initiation and with the handsfree unit during calls.
